# EUROPEAN PATENT APPLICATION

(11) **EP 3 479 921 A1**
(43) Date of publication of application: **08.05.2019**
(21) Application number: 17382748.6
(22) Date of filing: 07.11.2017
(51) Int. Cl.: B21D 43/05, B21D 43/10, B25J 15/00

(54) **DEVICE FOR HANDLING PARTS**

(71) Applicant: ABB Schweiz AG, 5400 Baden (CH)
(72) Inventor: Roda Leal, Antonio, 08290 Cerdanyola del Vallès (ES); Trujillo Alonso, Miguel-Angel, 08203 Sabadell (ES); Monje, Oscar, 08173 Sant Cugat del Vallès (ES)
(74) Representative: ZBM Patents - Zea, Barlocci & Markvardsen

(57) **Abstract**

A device (1) for handling parts is provided. The device comprises a supporting structure (100) which is connectable to a wrist (11) of an industrial robot (10), a displaceable arm (300) which is attached to the supporting structure such as to be displaceable in the direction of its longitudinal axis with respect to the supporting structure and a mobile wagon (400) mounted displaceable along the displaceable arm. The device further comprises a tilting module (510,520) which is mounted on the mobile wagon and perpendicular to the displaceable arm, a servomotor (611,622) mounted on the mobile wagon and arranged to drive the tilting module in rotation and a tooling connector (511) for attaching a tooling to the tilting module.

## Description

The present disclosure is related to a device for handling parts, more specifically to a device attachable to the wrist of an industrial robot.

### BACKGROUND ART

It is known to use industrial robots for loading and unloading workpieces or parts in a press line, such as those employed for manufacturing vehicle bodywork parts.

In the present disclosure an "industrial robot" is an automatically controlled, reprogrammable multipurpose manipulator that is programmable in three or more axes, in accordance with the definition of ISO Standard 8373.

Different end effectors to be operated by an industrial robot may be mounted on the wrist of the robot: for example, grippers for handling and transferring blanks between two different press systems in a press line.

Auxiliary devices may also be attached between the wrist of the robot and the tools: for example, it is known to couple an additional axis to the wrist of an industrial robot, for example an articulated industrial robot with 4 or 6 rotational axes, to improve the performance or the versatility of the robot, for example to reduce cycle times, allow more efficient transfer paths, etc. The gripper or other tool is then coupled to the end element of the additional arm.

For example, the robotics division of ABB (www.abb.com, Sweden) provides an additional linear axis that can be mounted on the wrist of the industrial robot and comprises a mobile wagon displaceable along a linear axis structure, which is turn is displaceable in its own longitudinal direction with respect to the robot wrist. This additional linear axis (for example a 7^{th} linear axis if attached to a 6-axis robot) allows reducing the time required to complete the transference from one press to another, by providing a compound linear acceleration while moving a blank in and out of a press.

It is also known to provide a tilting mechanism attached to an industrial robot, to tilt a predetermined angle the blanks or workpieces when they are placed in a press die and/or removed therefrom.

A known device comprises a linear axis attached to the wrist of a robot, and a tilting mechanism able to tilt a blank or workpiece. The tilting mechanism comprises a tilting axis, that is mounted on a carriage that reciprocates along the linear axis. However, the tilting axis is driven by a motor that is attached to the wrist of the robot, and therefore this known configuration requires a mechanical transmission between the motor fixed to the wrist and the displaceable tilting axis. Furthermore, it only allows handling one blank at the time, or two blanks that are tilted the same tilting angle.

It may be desirable to further increase the performance in the loading and unloading operations, by providing a device for handling parts or blanks that is efficient and versatile, at reasonable costs.

### SUMMARY OF THE DISCLOSURE

According to a first aspect, a device for handling parts is provided. The device comprises a supporting structure which is connectable to a wrist of an industrial robot, a displaceable arm which is attached to the supporting structure such as to be displaceable in the direction of its longitudinal axis with respect to the supporting structure, and a mobile wagon mounted displaceable along the displaceable arm. The device further comprises a tilting module which is mounted on the mobile wagon and perpendicular to the displaceable arm, a servomotor mounted on the mobile wagon and arranged to drive the tilting module in rotation, and a tooling connector for attaching a tooling to the tilting module.

The use of a servomotor mounted on the mobile wagon together with the tilting module provides an efficient mechanical solution to enhance the performance of the robot, without the need to transmit a rotation from the wrist of the robot to the movable tilting module. The controller of the industrial robot may control the servomotor, as well as the movement of the displaceable arm and mobile carriage.

In an example, the device comprises two tilting modules mounted on the mobile wagon and perpendicular to the displaceable arm, two servomotors mounted on the mobile wagon, each arranged to drive a tilting module; and two corresponding tooling connectors, for attaching a tooling to each tilting module. The two tilting modules and the two servomotors may be arranged at opposite sides of the displaceable arm with respect to the longitudinal axis of the displaceable arm.

By using two tilting modules and two servomotors the versatility of the device is further enhanced, as two blanks being handled simultaneously may be tilted independently and with different tilting angles.

The two tilting modules may be arranged to be controlled to rotate simultaneously, thereby being able to handle and tilt a single blank between them, e.g. a substantially large blank; furthermore, the two tilting modules may be arranged to be controlled to rotate independently, thereby being able to handle and tilt two blanks with different tilting angles. Thus, the two servomotors may be controlled by the controller of the robot to which the device is attached, to rotate simultaneously or independently, as convenient.

In an example, the device further comprises two housings attached to the mobile wagon, and each servomotor is mounted in one of the housings.

In an example, a proximal end of each tilting module is mounted in one of the housings through bearings.

In examples, the tooling connector may comprise a plurality of centering pins, and/or a pneumatic clamp to retain the tooling.

In an example, the device further comprises a servomotor arranged on the supporting structure to drive the displaceable arm and the mobile wagon.

According to another aspect, the present disclosure provides an industrial robot comprising at least three axes, and comprising a device for handling parts as disclosed herein.

The industrial robot may be an articulated robot comprising 4 rotational axes or 6 rotational axes between a base and a wrist, and the device for handling parts may be connected to the wrist.

In an example, the industrial robot comprises a controller, which also controls the servomotors of the device for handling parts.

Additional objects, advantages and features of embodiments will become apparent to those skilled in the art upon examination of the description, or may be learned by practice.

### BRIEF DESCRIPTION OF THE DRAWINGS

Particular embodiments of the present device will be described in the following by way of non-limiting examples, with reference to the appended drawings, in which:
Figure 1 illustrates a simplified perspective view of a device according to an example;
Figure 2 illustrates a simplified top view of a device according to an example;
Figures 3a and 3b illustrate simplified perspective views of a device according to an example, with some parts removed to show transmissions systems;
Figure 4 illustrates a simplified cross-section of a housing with a servomotor and with the proximal end of a tilting module, according to an example;
Figure 5 illustrates a schematic view of a tooling mounted on a tilting module according to an example; and
Figure 6 is a perspective view of an exemplary articulated robot having attached to it an implementation of a device for handling parts as described herein.

### DETAILED DESCRIPTION

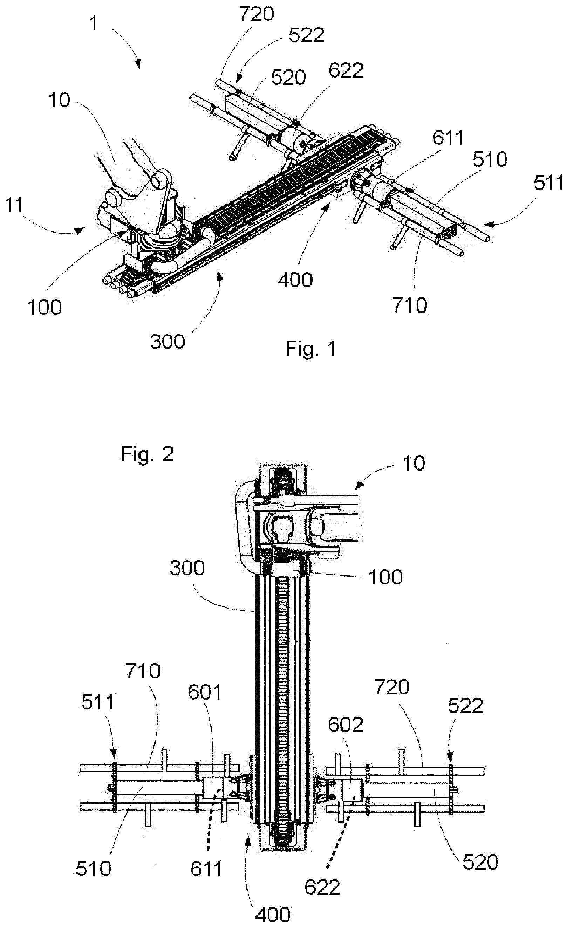

Figures 1 and 2 show a perspective view and a top view of a device 1 for handling workpieces in a press line, for example a multi-stage press line of the kind employed for stamping metal parts such as vehicle body parts. The device may be attached to the wrist of an industrial robot, for example an articulated robot, and employed for example to unload blanks from one press and load it in another press of the line. The device may be provided with a suitable connector (not shown) to engage in a wrist socket of the robot.

The device 1 may comprise a mechanism that is sometimes referred to as an additional linear axis: it comprises a supporting structure 100 intended to be fixedly connected to the wrist 11 of the industrial robot 10, and a displaceable arm 300 which may be mounted with respect to the supporting structure 100 in such a way that it is guided on the supporting structure and displaceable with a reciprocating movement in the direction of its own longitudinal axis.

The supporting structure 100 of Figures 1 and 2 may be provided with a connector or adapter for the attachment to the wrist 11 of the robot 10, and with a suitable arrangement for guiding the displacement of the arm 300.

The displaceable arm 300 of Figures 1 and 2 may comprise a mobile wagon 400, which may be mounted to move along the displaceable arm 300. That is, the movements of both the displaceable arm 300 and the mobile wagon 400 may be in the same direction: the displaceable arm 300 moves in its own longitudinal direction with respect to the supporting structure 100, and the mobile wagon 400 moves in the same direction, with respect to the displaceable arm 300. The two movements provide a compound linear acceleration when e.g. moving a blank in and out of a press, and therefore allow maintaining the press open a relatively short time.

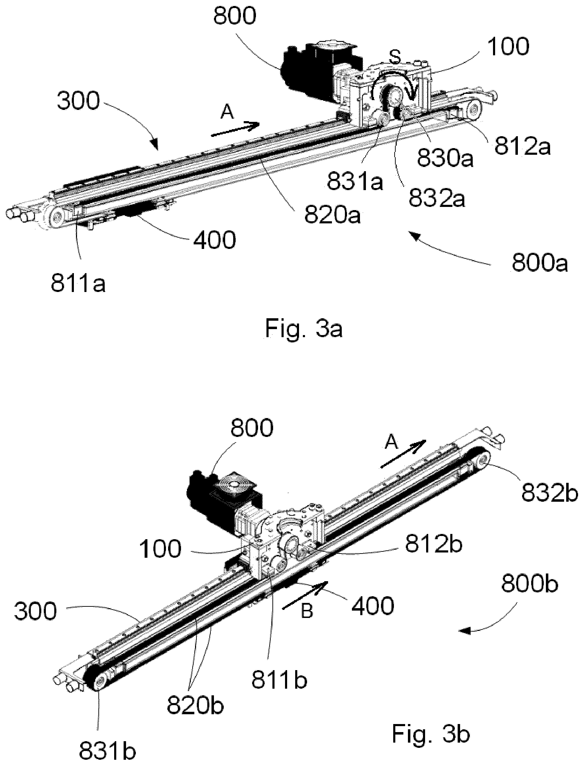

The views of Figures 3a and 3b, where parts of the cover have been omitted to show the inner part of the device, show a servomotor 800 attached to the supporting structure 100, and transmission systems 800a, 800b respectively arranged to drive the displaceable arm 300 and the mobile wagon 400 upon rotation of the servomotor.

In Figure 3a transmission 800a comprises a toothed drive pulley 830a which is driven in rotation by the servomotor 800, and a toothed belt 820a (in black in the figure) that meshes with the drive pulley 830a. The belt 820a passes around two idler pulleys 831a and 832a mounted on the supporting structure 100 at either side of the drive pulley 830a, and extends to substantially all the length of the displaceable arm. The two ends of the belt 820a are fixed to the displaceable arm 300 near the two ends thereof, at 811a and 812a.

Upon rotation of the servomotor 800 and drive pulley 830a in one direction, for example that of arrow S on the figure, the belt 820a is driven by the pulley 830a and pulls along the displaceable arm 300, which therefore moves with respect to the support structure 100, in the direction of the arrow A.

In Figure 3b transmission 800b comprises a belt 820b (in black in the figure), to which the mobile wagon 400 is firmly attached. The belt 820b extends to all the length of the displaceable arm 300 and is mounted around two idler pulleys 831b and 832b attached to the displaceable arm 300. The ends of the belt 820b are attached to the support structure 100, at 811b and 812b, such that when the displaceable arm 300 moves with respect to the support structure 100, the belt 820b causes the displacement of the mobile wagon 400 along the displaceable arm 300.

More particularly, when the servomotor 800 is controlled to rotate and cause the displaceable arm 300 to travel with respect to the support structure (for example as shown by arrow A in Figure 3b), the belt 820b causes the relative movement of the mobile wagon 400 with respect to the displaceable arm in the same direction (as shown by arrow B).

The overall displacement speed of the mobile wagon 400 is therefore the sum of the relative speed of the wagon 400 itself with respect to the arm 300, and the speed of the arm 300 with respect to the support structure 100.

In other examples the displaceable arm 300 and the mobile wagon 400 may be driven with any other suitable transmission.

The device 1 may further comprise at least one tilting module mounted on the mobile wagon 400 of the linear arm and powered by a servomotor, such that the parts or blanks to be handled may be tilted at a desired angle. The servomotor may be also mounted on the mobile wagon 400 for a direct drive of the tilting module, so that no transmission is required to rotate the tilting module.

A tilting module may comprise a tooling connector in order to receive a tooling suitable for a specific handling operation, for example a gripper with a mechanical, electromagnetic or vacuum gripping system, for picking and handling metal blanks in a press line.

The servomotor for the linear axis and/or the servomotor for a tilting module may be connected to be controlled and programmed by the controller of the robot to which the device is attached for operation. In this case, the linear axis and/or the tilting module constitute in practice additional axes of the robot, which give it enhanced handling possibilities.

A commercially available servomotor that may be employed in a device as disclosed herein may be for example model Baldor BSM63N-174AA, available from Baldor Electric Company (www.baldor.com, USA), which has a power of 0.53 KW and a rated speed of 4000 rpm, and a relatively small weight and diameter that make it suitable for being mounted on the moving wagon 400. It is also provided with a resolver for measuring degrees of rotation, which makes it compatible with a robot controller.

Figures 1 and 2 show an example of a device 1 for handling parts that has two tilting modules 510, 520 mounted on the mobile wagon 400. The tilting modules 510, 520 may be arranged with their rotation axes perpendicular to the displaceable arm 300 and on opposite sides of the arm 300, as shown in the figures. Their rotation axes may be horizontal when the device is in operation, and may be aligned with each other.

As also shown in Figures 1 and 2, each tilting module 510, 520 may be driven in rotation by a corresponding servomotor 611, 622. The servomotors 611, 622 may also be mounted on the mobile wagon 400, with their output shafts perpendicular to the displaceable arm 300 and on opposite sides of the arm 300, each in correspondence with a tilting module 510, 520 and with the output shaft aligned with the rotation axis of the tilting module.

The presence of two tilting modules and corresponding servomotors enables handling two parts independently from one another, for example with different tiling angles. On the other hand, if both servomotors are controlled and programmed by a controller, for example the robot controller, to drive the tilting modules simultaneously and with the same tilting angle, they may be used to handle a single part, for example a large blank or workpiece.

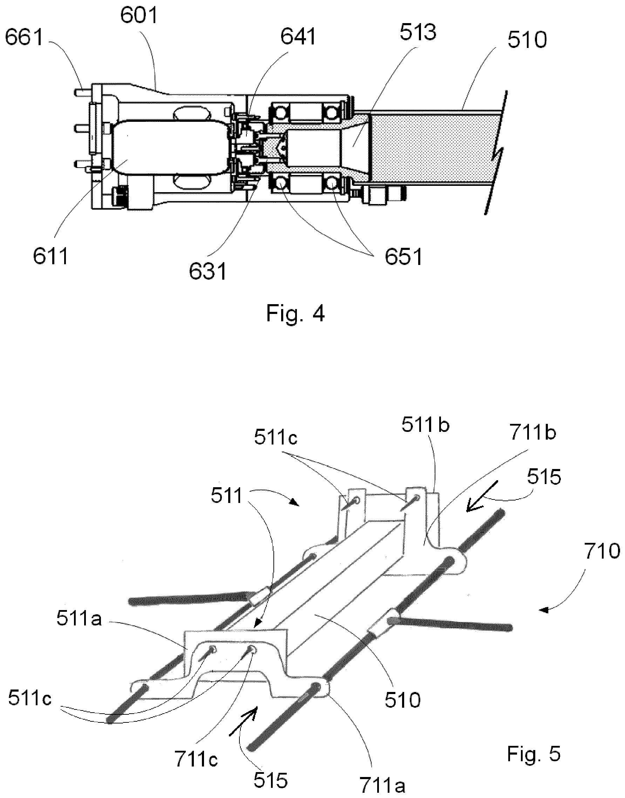

Figure 4 shows a longitudinal cross section through the servomotor 611 and part of the tilting module 510 of Figures 1 and 2; the configuration of the other servomotor 622 and tilting module 520 may be analogous and will therefore not be described.

The tilting module 510 may be at least partly hollow. In Figure 4 the tilting module 510 has been hatched, except for an axial cavity 513 thereof, in order to show its configuration more clearly.

As shown, the tilting module 510 and corresponding servomotor 611 may be attached to the mobile wagon 400 by means of a housing 601 that is firmly fixed, e.g. by means of screws 661, to the mobile wagon 400. The servomotor 611 may be secured inside the housing 601, and a proximal end of the tilting module 510 may be mounted inside the housing 601 through bearings to allow its rotation, for example two ball bearings 651. The rest of the tilting module 510 projects from the housing 601.

Also visible in the figure is a gearbox 641 of the servomotor 611, with its output shaft fixed to the tilting module 510, e.g. by screws 631, to drive the tilting module 510 in rotation.

As visible in Figures 1 and 2, each tilting module 510, 520 may comprise a corresponding tooling connector 511, 522, to which a tooling 710, 720, for example a gripper, may be attached for a specific job, for example for loading and unloading one or two particular blanks.

Figure 5 depicts schematically with more detail a tooling 710 attached to a tilting module 510 through a tooling connector 511, according to one example disclosed herein.

As shown in Figure 5, the tooling connector 511 may comprise a distal element 511a and a proximal element 511b, respectively arranged at the distal and proximal ends of tilting module 510. In the example shown in Figure 5, the distal element 511a and the proximal element 511b comprise centering pins 511c configured to assist in mounting a tooling 710 on the tilting module 510.

A tooling 710 may comprise for example, as shown in Figure 5, a distal plate 711a, and a U-shaped proximal plate 711b, which support between them the structure of the tooling 710. The distal and proximal plates 711a, 711b may comprise holes 711c, matching the centering pins 511c of the tooling connector 511.

To mount the tooling 710 on the tilting module 510, the proximal plate 711 is first fit around the tilting module 510, and then the tooling 710 is slid towards the proximal element 511b, until the centering pins 511c of the proximal and distal elements 511a, 511b engage the holes 711c of the distal and proximal plates 711a, 711b, respectively.

The tooling connector 511 may further comprise a pneumatic clamp or a similar releasably locking device, to retain the tooling 710 on the tilting module. In Figure 5 the pneumatic clamp is represented only very schematically by means of arrows 515.

An industrial robot to which a device according to examples disclosed herein may be connected may be an articulated robot with a number of programmable axes between the base and the wrist, e.g. depending on the specific requirements of each case. Thus, in addition to the robot own axes, the device 1 may provide an additional linear axis, and an additional tilting axis, or two additional tilting axes.

In an example, the robot may have at least four axes mounted in series between a robot base and a robot wrist. In another example, the robot may have six axes between the base and the wrist. Examples of commercial 6-axes articulated robots that may be employed in transfer systems such as IRB 6660, IRB 6650S, IRB 7600, or 4-axes robots such as IRB 660, IRB 760, all available from ABB (www.abb.com).

In use the robot may be directly fixed to a floor through the robot base or it may be mounted on a supporting structure, roof mounted, etc.

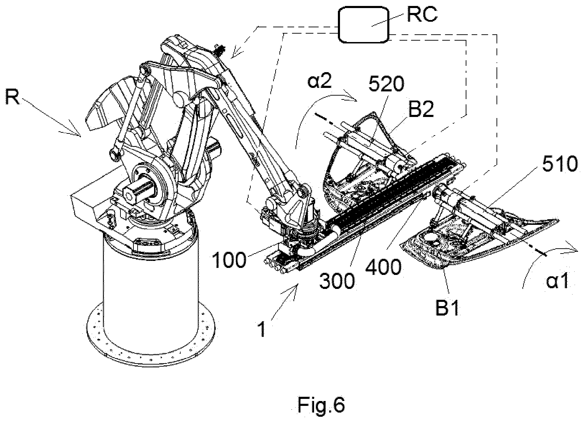

Figure 6 is a perspective view of an exemplary articulated robot R, in this case a 4-axis robot, having attached to its wrist a device 1 for handling parts an according to an implementation.

The device 1 is illustrated in the figure handling two blanks B1 and B2 during a stamping process: in this example, two blanks of vehicle doors.

The robot R may comprise or have associated a controller RC, which may be connected to control and program each of the servomotors of the device 1, as well as the axes of the robot R, as schematically indicated by the dotted lines in the figure.

For example, the controller RC may program the servomotors of the tilting modules 510 and 520 to rotate different angles α1 and α2, if the blanks B1 and B2 require different tilting angles to be e.g. loaded in the press die.

Although only a number of particular embodiments and examples have been disclosed herein, it will be understood by those skilled in the art that other alternative embodiments and/or uses of the disclosed innovation and obvious modifications and equivalents thereof are possible. Furthermore, the present disclosure covers all possible combinations of the particular embodiments described. The scope of the present disclosure should not be limited by particular embodiments, but should be determined only by a fair reading of the claims that follow.

## Claims

1. A device for handling parts, comprising:
a supporting structure connectable to a wrist of an industrial robot;
a displaceable arm, attached to the supporting structure such as to be displaceable in the direction of its longitudinal axis with respect to the supporting structure;
a mobile wagon mounted displaceable along the displaceable arm;
a tilting module mounted on the mobile wagon and perpendicular to the displaceable arm;
a servomotor mounted on the mobile wagon and arranged to drive the tilting module in rotation; and
a tooling connector for attaching a tooling to the tilting module.

2. The device according to claim1, comprising:
two tilting modules mounted on the mobile wagon and perpendicular to the displaceable arm;
two servomotors mounted on the mobile wagon, each arranged to drive a tilting module; and
two corresponding tooling connectors, for attaching a tooling to each tilting module, wherein the two tilting modules and the two servomotors are arranged at opposite sides of the displaceable arm with respect to the longitudinal axis of the displaceable arm.

3. The device according to claim 2, wherein the two tilting modules may be controlled to rotate independently.

4. The device according to any of claims 2 - 3, wherein the two tilting modules may be controlled to rotate simultaneously.

5. The device according to any of claims 2 - 4, further comprising two housings attached to the mobile wagon, and wherein each servomotor is mounted in one of the housings.

6. The device according to claim 5, wherein a proximal end of each tilting module is mounted in one of the housings through bearings.

7. The device according to any of claims 1 - 6, wherein the tooling connector comprises a plurality of centering pins.

8. The device according to any of claims 1 - 7, wherein the tooling connector comprises a pneumatic clamp to retain the tooling.

9. The device according to any of claims 1 - 8, further comprising a servomotor arranged on the supporting structure to drive the displaceable arm and the mobile wagon.

10. An industrial robot comprising at least three axes, and comprising a device for handling parts according to any of claims 1 - 9.

11. An industrial robot according to claim 10, which is an articulated robot comprising 4 rotational axes or 6 rotational axes between a base and a wrist, wherein the device for handling parts is connected to the wrist.

12. An industrial robot according to any of claims 10 - 11, comprising a controller, wherein the controller of the robot also controls the servomotors of the device for handling parts.
